# EUROPÄISCHE PATENTANMELDUNG

(11) **EP 2 020 678 A2**
(43) Veröffentlichungstag der Anmeldung: **04.02.2009**
(21) Anmeldenummer: 08157570.6
(22) Anmeldetag: 04.06.2008
(51) Int. Cl.: H01K 1/44, H01K 1/34, H01J 5/48

(54) **Elektrische Lampe mit einem Aussenkolben und einer im Aussenkolben angeordneten Einbaulampe**

(30) Priorität: 30.07.2007 DE 102007035597
(71) Anmelder: Osram Gesellschaft mit beschränkter Haftung, 81543 München (DE)
(72) Erfinder: Nittke, Andreas, 85111, Pietenfeld (DE)

(57) **Zusammenfassung**

Die Erfindung betrifft eine einseitig gesockelte elektrische Lampe (1) mit einem in einem Sockel (2) gelagerten Außenkolben (3) und mindestens einer innerhalb des Außenkolbens (3) angeordneten Einbaulampe (4), vorzugsweise einer Hochvolt-Halogenlampe, und mindestens zwei Stromzuführungsdrähten (15) von dem Sockel (2) zu der Einbaulampe (4).

Die mindestens zwei Stromzuführungsdrähte (15) sind von einem vorzugsweise zylindrischen Kolben (5), gebildet aus einem nichtleitenden lichtdurchlässigen Werkstoff, vorzugsweise identisch mit dem für den Außenkolben (3) verwendeten Werkstoff, insbesondere Glas, umgeben und der vorzugsweise zylindrische Kolben (5) ist als Haltevorrichtung für die Einbaulampe (4) ausgebildet.

## Beschreibung

### Technisches Gebiet

Die Erfindung betrifft eine einseitig gesockelte elektrische Lampe mit einem in einem Sockel gelagerten Außenkolben und mindestens einer innerhalb des Außenkolbens angeordneten Einbaulampe, vorzugsweise einer Hochvolt-Halogenlampe, und mindestens zwei Stromzuführungsdrähten von dem Sockel zu der Einbaulampe.

### Stand der Technik

Halogenglühlampen werden aufgrund ihrer hohen Lebensdauer und der angenehmen Lichtqualität zunehmend herkömmlichen Glühlampen vorgezogen. Um einen möglichst einfachen Ersatz bestehender Glühlampen durch Halogenglühlampen zu ermöglichen und gleichzeitig die optische Anmutung einer herkömmlichen Glühlampe aus ästhetischen oder funktionalen Gründen beizubehalten, werden häufig Lampen verwendet, bei denen die Außenkontur und damit insbesondere der Außenkolben und der Sockel einer herkömmlichen Glühlampe entsprechen, während innerhalb des Außenkolbens eine Halogenglühlampe als Einbaulampe angeordnet ist. Derartige Lampen werden beispielsweise von der OSRAM GmbH unter der Bezeichnung "HALOLUX® CLASSIC" hergestellt und vertrieben.

Um das Erscheinungsbild wie auch die Leuchteigenschaften einer derartigen Lampe denjenigen einer herkömmlichen Glühlampe anzugleichen, muss der Glühdraht der Einbaulampe annähernd an der gleichen Stelle wie der Glühdraht einer vergleichbaren herkömmlichen Glühlampe angeordnet werden. Dazu muss die wesentlich kompaktere Halogenlampe mittels einer Halterung im Außenkolben positioniert werden.

Aus der EP 0 498 256 ist es bekannt, die Einbaulampe direkt an den Stromzuführungsdrähten zu befestigen und somit diese als Halterung zu verwenden. Dies ist aber nur mit relativ kurzen Stromzuführungsdrähten möglich, da ansonsten die Lampe extrem erschütterungsempfindlich wird und bei einem Bruch des Außenkolbens die Netzspannung führenden Stromzuführungsdrähte freiliegen.

Eine bei den oben erwähnten "HALOLUX® CLASSIC"-Lampen verwendete Technologie zur Positionierung der Einbaulampe besteht darin, einen gläsernen Tellerfuß vorzusehen, der in den Außenkolben eingeschmolzen wird. Der Tellerfuß trägt ein aus Metall gefertigtes Gestell, durch das wiederum die Halogeneinbaulampe gehalten wird. Weiterhin sind in den Tellerfuß Stromzuführungsdrähte eingeschmolzen, an denen die Stromzuführungen der Einbaulampe angeschweißt werden. Dieser Aufbau benötigt für die Durchführung der Stromzuführungsdrähte durch den gläsernen Tellerfuß einen dreiteiligen Aufbau der Stromzuführungsdrähte und ist generell durch die Kombination von metallischen und gläsernen Komponenten sehr aufwändig.

Die DE 10 2005 051 076 offenbart eine Halterung für die Einbaulampe, die aus einem metallischen Montageclip besteht, in den die Einbaulampe eingeschoben wird. Der Montageclip ist am gläsernen Tellerfuß des Außenkolbens angebracht, was allerdings sehr aufwändig ist, da der gläserne Fuß ein sehr komplexes Bauteil darstellt, das beispielsweise Pumpstängel und eingeschmolzene Stromzuführungsdrähte umfasst. Bei der Verwendung eines metallischen Montageclips besteht zudem die Gefahr einer Beschädigung des Außenkolbens bei Montage oder Betrieb der Lampe und es muss sichergestellt werden, dass keine stromführenden Teile mit dem Clip in Verbindung kommen. Weiterhin ist die metallische Halterung optisch sehr auffällig und stört das von einer klassischen Glühbirne bekannte, transparente Erscheinungsbild erheblich.

### Darstellung der Erfindung

Der Erfindung liegt daher die Aufgabe zugrunde, eine einseitig gesockelte elektrische Lampe mit einem in einem Sockel gelagerten Außenkolben und mindestens einer innerhalb des Außenkolbens angeordneten Einbaulampe, vorzugsweise einer Hochvolt-Halogenlampe, und mindestens zwei Stromzuführungsdrähten von dem Sockel zu der Einbaulampe zu schaffen, die robust und einfach herstellbar ist und bei der die Stromzuführungsdrähte bei einem Bruch des Außenkolbens zuverlässig vor Berührung geschützt sind.

Die Aufgabe wird bezüglich der Lampe erfindungsgemäß dadurch gelöst, dass die mindestens zwei Stromzuführungsdrähte von einem vorzugsweise zylindrischen Kolben, gebildet aus einem nichtleitenden lichtdurchlässigen Werkstoff, vorzugsweise identisch mit dem für den Außenkolben verwendeten Werkstoff, insbesondere Glas, umgeben sind und der vorzugsweise zylindrische Kolben als Haltevorrichtung für die Einbaulampe ausgebildet ist. Ein lichtdurchlässiger Werkstoff beeinträchtigt die Abstrahlung des von der Einbaulampe abgegebenen Lichts nur wenig und ist optisch unauffällig, so dass das Erscheinungsbild der Lampe dem herkömmlicher Glühlampen wie auch dem bekannter Lampen mit Halogeneinbaulampe ähnelt. Fehler, wie beispielsweise eine Beschädigung der Stromzuführungsdrähte oder der Einbaulampe, sind bei einem durchsichtigen Werkstoff auch nach Fertigstellung der Lampe noch gut erkennbar. Ein zylindrischer Kolben ist aufgrund der einfachen Geometrie mit wesentlich weniger Aufwand herstellbar als beispielsweise ein Tellerfuß und bietet aufgrund der Verwendung eines nichtleitenden Werkstoffs einen guten Berührschutz für die Stromzuführungsdrähte. Ist der Werkstoff des vorzugsweise zylindrischen Kolbens identisch mit dem für den Außenkolben verwendeten, sind sowohl der optische Eindruck als auch die mechanischen und elektrischen Eigenschaften identisch, was insbesondere bei einer Verbindung zwischen den beiden Kolben von Vorteil ist. Da der Kolben als Haltevorrichtung ausgebildet ist, kann auf eine eigenständige Haltevorrichtung verzichtet werden, was den Aufwand bei der Herstellung der Lampe erheblich reduziert, da Bauteile und somit auch Prozessschritte eingespart werden können.

Besonders vorteilhaft ist es, wenn der vorzugsweise zylindrische Kolben mit dem Außenkolben verbunden, vorzugsweise verschmolzen, ist. Indem die beiden Kolben miteinander verbunden sind, wird eine einfache Handhabung bei der Herstellung ermöglicht. Durch eine Verschmelzung ist besonders einfach eine Verbindung zwischen den Komponenten herstellbar, da dies ein einfacher und bei der Lampenherstellung weit verbreiteter Prozess ist.

Es ist zweckmäßig, wenn der vorzugsweise zylindrische Kolben mindestens eine Ausnehmung zur Aufnahme der Einbaulampe aufweist. Eine derartige Ausnehmung, beispielsweise eine Öffnung oder eine Vertiefung, sind gut geeignet, um die Einbaulampe zumindest gegenüber Bewegungen in radialer Richtung zu fixieren.

Dabei ist es vorteilhaft, wenn die Ausnehmung zur Aufnahme der Einbaulampe annähernd die Kontur der Querschnittsfläche des Sockels der Einbaulampe aufweist. Dadurch sind keine zusätzlichen Haltehilfen notwendig, um die Einbaulampe exakt zu positionieren.

In einer zweckmäßigen Weiterbildung der Erfindung ist es von Vorteil, wenn die Querschnittsfläche der Ausnehmung zur Aufnahme der Einbaulampe eine zumindest annähernd rechteckförmige Kontur aufweist. Die Sockel von Einbaulampen weisen oft eine rechteckförmige Außenkontur, beispielsweise mit einem rechteckigen oder doppel-T-förmigen Querschnitt, auf. Diese Sockel können in einer Ausnehmung mit rechteckförmiger Kontur besonders gut gehalten werden.

In einer zweckmäßigen Weiterbildung der Erfindung ist die Ausnehmung als Schlitz mit zwei parallelen Seitenflächen ausgebildet. Sockel von typischen Einbaulampen besitzen zumeist mindestens zwei in axialer Richtung planparallele Flächen, die in einem derartigen, beispielsweise rechteckförmigen Schlitz, insbesondere, wenn dieser mit der Längsachse in axialer Richtung orientiert ist, besonders gut geführt bzw. gehalten werden können. Die gilt insbesondere für Sockel mit einem rechteckigen oder doppel-T-förmigen Querschnitt.

Weiterhin ist es vorteilhaft, wenn die Einbaulampe einen Sockel mit doppel-T-förmigem Querschnitt aufweist und an mindestens zwei Flanschen des Sockels auf der Innenseite des Flansches jeweils mindestens eine Außenkante eines an mindestens einen Schlitz angrenzenden Zylindersegments des zylindrischen Kolbens anliegt. Dadurch ist eine Führung in radialer Richtung parallel zum Steg des doppel-T-förmigen Sockels auf einfache Weise realisierbar.

In einer zweckmäßigen Weiterbildung der Erfindung weist der vorzugsweise zylindrische Kolben einen oberen Bereich mit einer rechteckförmigen Außenkontur auf. Vor allem für die zumeist ebenfalls annähernd rechteckförmigen Sockel der Einbaulampen ist ein rechteckförmiger Bereich des Kolbens als Halterung besonders geeignet, da dann dort eine rechteckförmige Ausnehmung platziert werden kann, um die allseitig die gleiche Wandstärke gewählt werden kann.

Es ist von Vorteil, wenn mindestens ein Federelement zwischen dem vorzugsweise zylindrischen Kolben und der Einbaulampe angeordnet ist. Federelemente sind besonders gut geeignet, um Kräfte zwischen spröden Materialien, wie beispielsweise bei den zur Lampenherstellung meist verwendeten Gläsern, zu übertragen und Maßtoleranzen auszugleichen. Ein zwischen Kolben und Einbaulampe angeordnetes Federelement kann sehr einfach ausgeführt sein, da dieses nur eine lineare Kraftübertragung vornehmen muss und keine Führungskräfte übertragen werden müssen.

Es ist ebenfalls von Vorteil, wenn mindestens eine Stromzuführung der Einbaulampe als Federelement ausgebildet ist. Die Stromzuführungen der Einbaulampe sind ohnehin vorhanden und weisen meist die notwendigen elastischen Eigenschaften auf, um als Federelement Verwendung zu finden. Durch einfache Biegeprozesse können diese Drähte so geformt werden, dass sie als Federelement wirken.

Weiterhin ist es zweckmäßig, wenn mindestens eine von dem Sockel zu der Einbaulampe führender Stromzuführungsdraht mit mindestens einer Stromzuführung der Einbaulampe durch eine Schweißverbindung verbunden ist. Dadurch wird mit einfachen Mitteln eine Verbindung hergestellt, die sowohl mechanische Kräfte als auch elektrischen Strom sicher und zuverlässig übertragen kann.

### Kurze Beschreibung der Zeichnungen

Im Folgenden soll die Erfindung anhand von vier Ausführungsbeispielen erläutert werden. Gleiche beziehungsweise funktional gleiche Bauteile sind mit gleichen Bezugszahlen gekennzeichnet. Zur Verdeutlichung der Konturen sind Glasbauteile zumeist undurchsichtig dargestellt. Die Figuren zeigen:
- Fig. 1: ein erstes Ausführungsbeispiel einer erfindungsgemäßen Lampe in perspektivischer Ansicht,
- Fig. 2: eine erfindungsgemäße Lampe gemäß dem ersten Ausführungsbeispiel in einer perspektivischen Detaildarstellung,
- Fig. 3: eine erfindungsgemäße Lampe gemäß dem zweiten Ausführungsbeispiel in einer perspektivischen Detaildarstellung,
- Fig. 4: eine Detailansicht einer erfindungsgemäßen Lampe gemäß dem zweiten Ausführungsbeispiel in einer perspektivischen Schnittbilddarstellung.

### Bevorzugte Ausführung der Erfindung

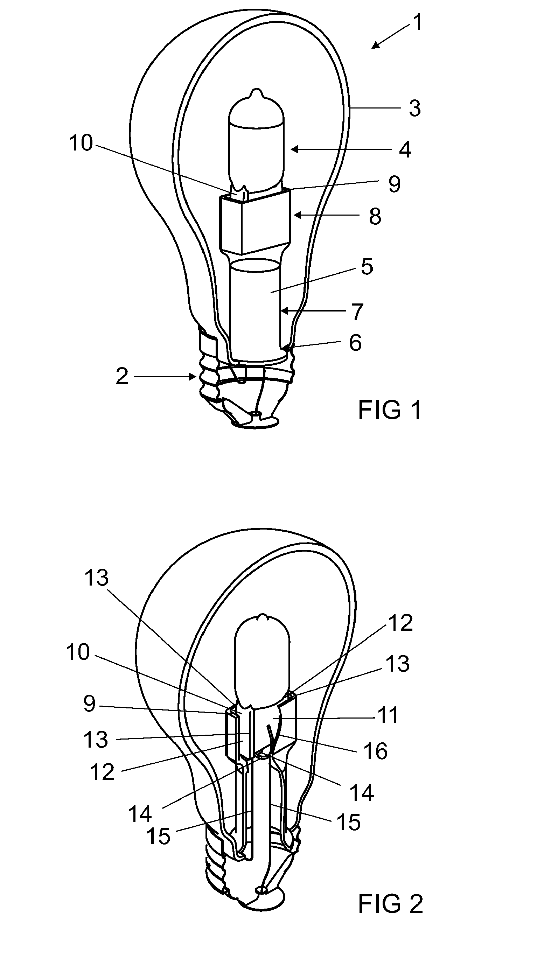

Figur 1 zeigt eine erfindungsgemäße Lampe 1 in einer perspektivischen Darstellung. In einem Sockel 2 des handelsüblichen Typs E27 ist ein Außenkolben 3 vom Typ A55 gehalten. Innerhalb des Außenkolbens 3 ist eine Einbaulampe 4 so angeordnet, dass sich ein hier nicht dargestellter Glühdraht der Einbaulampe 4 annähernd an der Stelle innerhalb des Außenkolbens 3 befindet, an der bei einer herkömmlichen Glühlampe ebenfalls der Glühdraht angeordnet ist. Die Einbaulampe 4 ist als Hochvolt-Halogenlampe ausgeführt und als solche aus dem Stand der Technik bekannt.

Die Einbaulampe ist in einem zylindrischen Kolben 5 gehalten, der in einem unteren Bereich 6 aufgeweitet und mit dem Außenkolben 3 verschmolzen ist. Dies ermöglicht eine ebenso einfache wie sichere Verbindung der beiden Kolben 3, 5, die beide aus dem gleichen Werkstoff, im vorliegenden Ausführungsbeispiel ein im Lampenbau übliches Weichglas, gefertigt sind.

Während der untere Bereich 6 und der mittlere Bereich 7 des Kolbens 5 eine zylindrische Form besitzen, ist der obere Bereich 8 rechteckförmig aufgeweitet. Dadurch ist dort eine rechteckförmige Öffnung 9 gegeben, in der der Sockel 10 der Einbaulampe 4 gehalten ist. Ein derartiger zylindrischer Kolben 5 ist einfach herstellbar, indem bei einem zylindrischen Glasrohr durch einen geeigneten zweifachen Quetschprozess der rechteckförmige obere Bereich 8 hergestellt wird.

In Figur 2 ist auch der zylindrische Kolben 5 teilweise aufgeschnitten dargestellt, um den Aufbau weiter zu verdeutlichen. Der Sockel 10 der Einbaulampe 4 weist einen doppel-T-förmigen Querschnitt auf, bei dem ein Steg 11 zwischen zwei Flanschen 12 angeordnet ist. Die Abmessungen der rechteckförmigen Öffnung 9 entsprechen dabei annähernd den Außenabmessungen des Sockels 10 der Einbaulampe 4, d.h. den Abständen der Außenkanten 13 der Flansche 10. Die Einbaulampe 4 ist über Stromzuführungen 14 elektrisch mit Stromzuführungsdrähten 15 verbunden. Die Stromzuführungen 14 der Einbaulampe 4 sind seitlich und nach oben abgebogen. Dadurch wirken die Stromzuführungen 14 als Federelement zwischen der Kolbenwand 16 und dem Sockel 10 der Einbaulampe 4 und können Maßungenauigkeiten von Sockel 10 oder zylindrischem Kolben 5 ausgleichen. Der Kontakt von Glas auf Glas kann dadurch ebenso vermindert bzw. vermieden werden wie das aufgrund unvermeidlicher Maßtoleranzen sich ansonsten ergebende Geräusch, wenn der Sockel 10 der Einbaulampe 4 bei Vibrationen der Lampe 1 an die Kolbenwand 16 stößt. Zudem wird aufgrund der Schrägstellung der Stromzuführungen 14 oder der daran befestigten Stromzuführungsdrähte 15 das Einführen der Einbaulampe 4 in den zylindrischen Kolben 5 erleichtert. Die Klemmwirkung der Stromzuführungen 14 wirkt zudem als zusätzliche Sicherung gegenüber Verschiebungen der Einbaulampe 4 im zylindrischen Kolben 5. Dadurch werden insbesondere die Haltekräfte in axialer Richtung, die von den Stromzuführungen 14 auf die vom Sockel 2 der Lampe 1 zu der Einbaulampe 4 führenden Stromzuführungsdrähte 15 übertragen werden, reduziert.

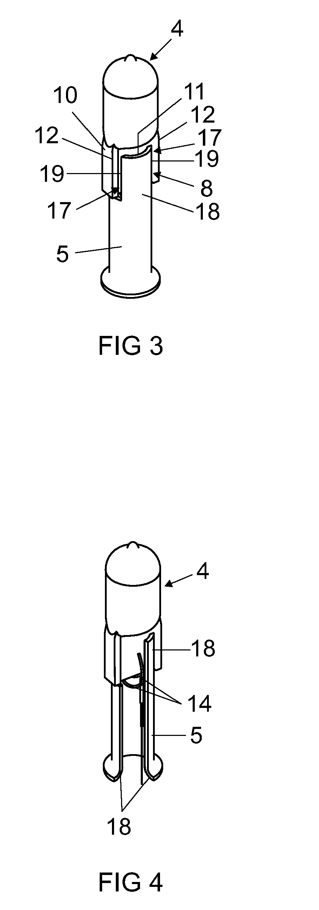

Figur 3 zeigt ein weiteres Ausführungsbeispiel der Erfindung. Aus Gründen der Übersichtlichkeit wurde hier auf die Darstellung des Außenkolbens 3 und des Sockels 2 der Lampe 1 verzichtet und lediglich der zylindrische Kolben 5 und die Einbaulampe 4 gezeigt.

Der zylindrische Kolben 5 weist im oberen Bereich 8 zwei rechteckförmige Schlitze 17 auf, in denen der Sockel 10 der Einbaulampe 4 gehalten ist. Die Schlitze 17 sind an gegenüberliegenden Seiten des Kolbens 5 angeordnet, so dass deren Breite und damit der Abstand zwischen zwei identischen, gegenüberliegenden Zylindersegmenten 18 der Dicke des Stegs 11 des Sockels 10 der Einbaulampe 4 entspricht. Der Durchmesser des zylindrischen Kolbens 5 ist so gewählt, dass der Abstand zwischen den Kanten 19 eines Zylindersegments 18 der Breite des Stegs 11 entspricht, so dass die Einbaulampe 4 mit den Flanschen 12 seitlich an den Kanten 19 der Zylindersegmente 18 geführt ist.

Die Länge der Schlitze 17 entspricht der Länge des Sockels 10 der Einbaulampe 4, was eine möglichst große Anlagefläche zwischen dem zylindrischen Kolben 5 und dem Sockel 10 der Einbaulampe 4 ermöglicht, wodurch punktuelle Belastungen der Komponenten vermindert werden.

Die Schlitze 17 können mittels gängiger Methoden, wie Sägen, Schleifen oder Laserschneiden sehr präzise in den zylindrischen Kolben 5 einbracht werden. Quetschvorgänge, wie im ersten Ausführungsbeispiel zur Herstellung der rechteckigen Öffnung 9 im oberen Bereich 8 notwendig, können entfallen.

Wie aus Figur 4 ersichtlich, bei der der zylindrische Kolben 5 teilweise aufgeschnitten gezeigt ist, sind auch bei dieser Ausführungsform die Stromzuführungen 14 der Einbaulampe 4 seitlich und nach oben abgebogen. Sie wirken damit als Federelement auf die Zylindersegmente 18 und fixieren die Einbaulampe 4 zuverlässig. In axialer Richtung wird die Einbaulampe 4 auch bei diesem Ausführungsbeispiel durch die Stromzuführungsdrähte 15 gesichert, die mit den Stromzuführungen 14 verschweißt sind.

Selbstverständlich sind auch andere Ausgestaltungen der Erfindung denkbar, insbesondere um bei einer anderen als der gezeigten Sockelform eine möglichst gute Halterung des Einbaulampe 4 zu erzielen. So sind bei beiden Ausführungsformen Varianten denkbar, bei denen eigenständige Federelemente, beispielsweise in Form von gebogenen Blechplättchen, zwischen dem Sockel 10 und den Zylindersegmenten 18 beziehungsweise der Kolbenwand 16 platziert sind.

Um die Einführung der Einbaulampe 4 in den zylindrischen Kolben 5 zu erleichtern, können zudem die oberen Kanten des zylindrischen Kolbens 5 angeschrägt sein.

Für die beiden Stromzuführungsdrähte 15 werden die üblicherweise für diesen Zweck verwendeten Metalle bzw. Metalllegierungen verwendet, beispielsweise Kupfer, Kupfer-Nickel-Legierungen, Federstahldrähte, insbesondere vom Chrom-Nickel-Typ oder weitere Eisenbasislegierungen. Ebenso können für die Glaskomponenten die üblicherweise im Lampenbau verwendeten Glassorten zum Einsatz kommen.

Anstelle des in den Ausführungsbeispielen gezeigten und für eine Allgebrauchsglühlampe typischen Außenkolbens 3 mit der Bezeichnung A55 sind selbstverständlich auch andere Kolbenformen, wie beispielsweise die Typen A60, R63, R80 oder G95 denkbar, wie auch anstelle des gezeigten Schraubsockels 2 vom Typ E27 andere Sockelgrößen wie beispielsweise E14 oder E40 sowie andere Sockeltypen wie beispielsweise Bajonett- oder Stecksockel möglich sind.

Bei der Montage der Lampe 1 werden zunächst die Stromzuführungen 14 der Einbaulampe 4 in die passende Form gebogen und dann mit den Stromzuführungsdrähten 15 verschweißt. Gegebenenfalls kann sich daran noch ein Biegevorgang anschließen, bei dem die Stromzuführungen 14 ihre endgültige Form erhalten. Danach werden die Stromzuführungsdrähte 15 in den zylindrischen Kolben 5 eingeführt und der Außenkolben 3 darübergestülpt und mit dem zylindrischen Kolben 5 verschmolzen. Abschließend wird der mit Kitt versehene Sockel 2 über den Außenkolben 3 geschoben, der Kitt ausgeheizt und die Stromzuführungsdrähte 15 auf Maß gebracht und mit dem Sockel 2 durch Lötung verbunden.

## Patentansprüche

1. Einseitig gesockelte elektrische Lampe (1) mit einem in einem Sockel (2) gelagerten Außenkolben (3) und mindestens einer innerhalb des Außenkolbens (3) angeordneten Einbaulampe (4), vorzugsweise einer Hochvolt-Halogenlampe, und mindestens zwei Stromzuführungsdrähten (15) von dem Sockel (2) zu der Einbaulampe (4), **dadurch gekennzeichnet, dass** die mindestens zwei Stromzuführungsdrähte (15) von einem vorzugsweise zylindrischen Kolben (5), gebildet aus einem nichtleitenden lichtdurchlässigen Werkstoff, vorzugsweise identisch mit dem für den Außenkolben (3) verwendeten Werkstoff, insbesondere Glas, umgeben sind und der vorzugsweise zylindrische Kolben (5) als Haltevorrichtung für die Einbaulampe (4) ausgebildet ist.

2. Einseitig gesockelte elektrische Lampe (1) nach Anspruch 1, **dadurch gekennzeichnet, dass** der vorzugsweise zylindrische Kolben (5) mit dem Außenkolben (3) verbunden, vorzugsweise verschmolzen, ist.

3. Einseitig gesockelte elektrische Lampe (1) nach Anspruch 1 oder 2, **dadurch gekennzeichnet, dass** der vorzugsweise zylindrische Kolben mindestens eine Ausnehmung (9, 17) zur Aufnahme der Einbaulampe (4) aufweist.

4. Einseitig gesockelte elektrische Lampe (1) nach einem der Ansprüche 1 bis 3, **dadurch gekennzeichnet, dass** die Ausnehmung (9) zur Aufnahme der Einbaulampe (4) annähernd die Kontur der Querschnittsfläche des Sockels (10) der Einbaulampe (4) aufweist.

5. Einseitig gesockelte elektrische Lampe (1) nach einem der Ansprüche 1 bis 4, **dadurch gekennzeichnet, dass** die Querschnittsfläche der Ausnehmung (9, 17) zur Aufnahme der Einbaulampe (4) eine zumindest annähernd rechteckförmige Kontur aufweist.

6. Einseitig gesockelte elektrische Lampe (1) nach einem der Ansprüche 1 bis 5, **dadurch gekennzeichnet, dass** die Ausnehmung (17) als Schlitz (17) mit zwei parallelen Seitenflächen (19) ausgebildet ist.

7. Einseitig gesockelte elektrische Lampe (1) nach einem der Ansprüche 1 bis 6, **dadurch gekennzeichnet, dass** die Einbaulampe (4) einen Sockel (10) mit doppel-T-förmigem Querschnitt aufweist und an mindestens zwei Flanschen (12) des Sockels (10) auf der Innenseite des Flansches (12) jeweils mindestens eine Außenkante (19) eines an mindestens einen Schlitz (17) angrenzenden Zylindersegments (18) des zylindrischen Kolbens (5) anliegt.

8. Einseitig gesockelte elektrische Lampe (1) nach einem der Ansprüche 1 bis 7, **dadurch gekennzeichnet, dass** der vorzugsweise zylindrische Kolben (5) einen oberen Bereich (8) mit einer rechteckförmigen Außenkontur aufweist.

9. Einseitig gesockelte elektrische Lampe (1) nach einem der Ansprüche 1 bis 8, **dadurch gekennzeichnet, dass** mindestens ein Federelement (14) zwischen dem vorzugsweise zylindrischen Kolben (5) und der Einbaulampe (4) angeordnet ist.

10. Einseitig gesockelte elektrische Lampe (1) nach einem der Ansprüche 1 bis 9, **dadurch gekennzeichnet, dass** mindestens eine Stromzuführung (14) der Einbaulampe (4) als Federelement (14) ausgebildet ist.

11. Einseitig gesockelte elektrische Lampe (1) nach einem der Ansprüche 1 bis 10, **dadurch gekennzeichnet, dass** mindestens ein von dem Sockel (2) zu der Einbaulampe (4) führender Stromzuführungsdraht (15) mit mindestens einer Stromzuführung (14) der Einbaulampe (4) durch eine Schweißverbindung verbunden ist.
